# EUROPÄISCHE PATENTSCHRIFT

(11) **EP 2 496 840 B1**
(45) Veröffentlichungstag und Bekanntmachung des Hinweises auf die Patenterteilung: **23.03.2016**
(21) Anmeldenummer: 10774143.1
(22) Anmeldetag: 04.11.2010
(51) Int. Cl.: F04D 29/42, F02B 37/007

(54) **ANSAUGGEHÄUSE**
SUCTION HOUSING
CARTER D'ASPIRATION

(30) Priorität: 06.11.2009 DE 102009052163
(43) Veröffentlichungstag der Anmeldung: 12.09.2012
(73) Patentinhaber: MTU Friedrichshafen GmbH, 88045 Friedrichshafen (DE)
(72) Erfinder: GUNKEL, Rolf, 88048 Friedrichshafen (DE); HIRY, Johannes, 88069 Tettnang (DE); REITZ, Jörg, Andre, 88682 Salem (DE)
(74) Vertreter: Schimek, Wolfgang Stefan
(86) Internationale Anmeldenummer: PCT/EP2010/006729
(87) Internationale Veröffentlichungsnummer: WO 2011/054520

(56) Entgegenhaltungen:
- DE-A1- 3 838 264
- DE-A1- 19 809 854
- FR-A5- 2 109 411
- US-B1- 6 378 309

## Beschreibung

Die vorliegende Erfindung betrifft ein Ansauggehäuse gemäß dem Oberbegriff von Anspruch 1. Ein solches Ansauggehäuse ist aus DE 3838264 bekannt.

Bei Brennkraftmaschinen bzw. Motoren sind mitunter mehrere Ladergruppen bzw. Turboladergruppen vorgesehen. Insbesondere bei Dieselmotoren in V-Bauweise mit zweistufiger Aufladung mittels Turboladern (z.B. Niederdrucklader und Hochdrucklader) ist es bekannt, je Zylinderbank eine Ladergruppe vorzusehen, wobei eine Ladergruppe in der Regel mehrere Turbolader für eine z.B. mehrstufige Verdichtung aufweist. Bei einer packageoptimalen Anordnung stehen sich die Lufteintritte der ersten Verdichterstufen dabei zumeist genau gegenüber, wobei die Verdichter gleich oder gegenläufig drehen können.

Ein Verdichter der ersten Ladergruppe der ersten Zylinderbank und ein Verdichter der zweiten Ladergruppe der zweiten Zylinderbank müssen sich z.B. die Ladeluft (vom Luftfilter kommend) so ansaugen, dass keine gegenseitige Beeinflussung stattfindet und keine Verschiebung des Verdichterkennfeldes durch die 90 Grad-Umlenkung infolge z.B. Drall oder Ablösung des Luftstroms vor dem Verdichter stattfindet.

Um beide Verdichter mit Ladeluft zu versorgen, muss die Ladeluft bei bekannten Anordnungen sehr scharf umgelenkt werden, was oftmals zu einer deutlichen Verschlechterung des Verdichterkennfeldes führt. Eine Umlenkung wird zum Beispiel mittels Hosenrohren erzielt, welche zwischen den Verdichtern angeordnet sind. Bei einer derartigen Lösung verzweigt sich das Ansaugrohr z.B. auf zwei Verdichter. Nachteilig ist dabei insbesondere der erhebliche Bauraum, welcher durch den großen Einlaufradius verursacht wird.

Ausgehend hiervon liegt der vorliegenden Erfindung die Aufgabe zugrunde, ein Ansauggehäuse vorzuschlagen, welches oben genannte Nachteile überwindet und durch welches eine Laderanordnung deutlich platzsparender ausgeführt werden kann, bzw. eine schmalere Packagedimensionierung innerhalb der Brennkraftmaschine erreicht werden kann.

Diese Aufgabe wird erfindungsgemäß durch die Merkmale des Anspruchs 1 gelöst.

Erfindungsgemäß wird ein Ansauggehäuse für eine Brennkraftmaschine vorgeschlagen, insbesondere zur Anordnung zwischen einem ersten und einem zweiten Verdichter einer Brennkraftmaschine, wobei das Ansauggehäuse einen Innenraum aufweist, welcher von einem Bodenelement, einem ersten und zweiten sich gegenüberliegenden, vom Bodenelement aufragenden Seitenwandelement sowie einem ersten und einem zweiten sich gegenüberliegenden, vom Bodenelement aufragenden Stirnwandelement umfasst ist, wobei gegenüber des Bodenelements ein offenes Ende mit einer Einlassöffnung zum Eintritt von Ladeluft in den Innenraum des Ansauggehäuses gebildet ist, wobei im Innenraum ein zwischen erstem und zweitem Seitenwandelement angeordnetes, vom Bodenelement aufragendes Stegelement ausgebildet ist, welches das erste und das zweite Stirnwandelement miteinander verbindet, und wobei das erste Seitenwandelement eine erste Auslassöffnung und das zweite Seitenwandelement eine zweite Auslassöffnung jeweils zur Anströmung eines Verdichtereinlasses aufweisen, wobei das Bodenelement ein von diesem in Richtung Innenraum hervorragendes Rippenelement auf weist, welches quer, insbesondere senkrecht, zu dem Stegelement angeordnet ist.

Bei einer erfindungsgemäßen Ausführungsform des Ansauggehäuses ragt das Stegelement im Wesentlichen senkrecht vom Bodenelement auf.

Bei noch einer weiteren erfindungsgemäßen Ausführungsform des Ansauggehäuses ragen das erste und das zweite Seitenwandelement sowie das erste und zweite Stirnwandelement im Wesentlichen senkrecht vom Bodenelement auf.

Des Weiteren wird ein Ansauggehäuse vorgeschlagen, wobei das Stegelement das erste und das zweite Stirnwandelement derart miteinander verbindet, dass ein Querschnitt aus erstem und zweitem Stirnwandelement sowie dem Stegelement im Wesentlichen eine H-Form bildet, insbesondere eine H-Form mit mittig zwischen erstem und zweitem Schenkel der H-Form angeordnetem Steg.

Bei einer erfindungsgemäßen Ausführungsform des Ansauggehäuses liegt die erste Auslassöffnung des ersten Seitenwandelements der zweiten Auslassöffnung des zweiten Seitenwandelements gegenüber. Dabei können die erste und die zweite Auslassöffnung einen gleichen Auslassquerschnitt aufweisen.

Weiterhin weisen bei einer weiteren erfindungsgemäßen Ausführungsform die erste und die zweite Auslassöffnung gleichen Abstand zum Bodenelement und/oder zu einem Stirnwandelement und/oder zu dem Stegelement auf.

Vorgeschlagen wird erfindungsgemäß auch ein Ansauggehäuse, wobei das Bodenelement in Verbindung mit erstem und zweitem Stirnwandelement im Querschnitt im Wesentlichen eine U-Form ausbildet.

Weiterhin wird ein erfindungsgemäßes Ansauggehäuse vorgeschlagen,bei welchem die erste und/oder die zweite Auslassöffnung in Richtung vom Boden zur Einlassöffnung oberhalb des Rippenelements gebildet sind.

Bei einer erfindungsgemäßen Ausführungsform des Ansauggehäuses weisen das erste und/oder das zweite Seitenwandelement im Bereich der ersten und zweiten Auslassöffnung in Auslassrichtung eine Trichterform bzw. einen trichterförmigen Querschnitt auf.

Weiterhin wird ein erfindungsgemäßes Ansauggehäuse vorgeschlagen, wobei das Stegelement den Innenraum des Ansauggehäuses in zwei Kammern, insbesondere gleichen Volumens, teilt.

Bei einer weiteren erfindungsgemäßen Ausführungsform weist das Ansauggehäuse am offenen Ende ein Befestigungselement auf.

Bei noch einer weiteren erfindungsgemäßen Ausführungsform des Ansauggehäuses weist ein Seitenwandelement an einer dem Innenraum gegenüberliegenden Außenseite eine Befestigungsvorrichtung auf, insbesondere zur Befestigung eines Faltenbalgs.

Vorgeschlagen wird erfindungsgemäß auch eine Brennkraftmaschine mit einem ersten und einem zweiten Verdichter, wobei zwischen erstem und zweitem Verdichter ein erfindungsgemäßes Ansauggehäuse angeordnet ist.

Bei einer weiteren erfindungsgemäßen Ausführungsform der Brennkraftmaschine ist der erste Verdichter mit einem Verdichtereinlass an der ersten Auslassöffnung angeordnet und/oder der zweite Verdichter mit einem Verdichtereinlass an der zweiten Auslassöffnung angeordnet.

Gemäß noch einer weiteren erfindungsgemäßen Ausführungsform der Brennkraftmaschine ist zwischen einem Verdichter und dem Ansauggehäuse ein Faltenbalg angeordnet.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnungen näher erläutert. Es zeigen:
Fig. 1 exemplarisch ein zwischen zwei Verdichtern angeordnetes Ansauggehäuse gemäß einer möglichen Ausführungsform der Erfindung;

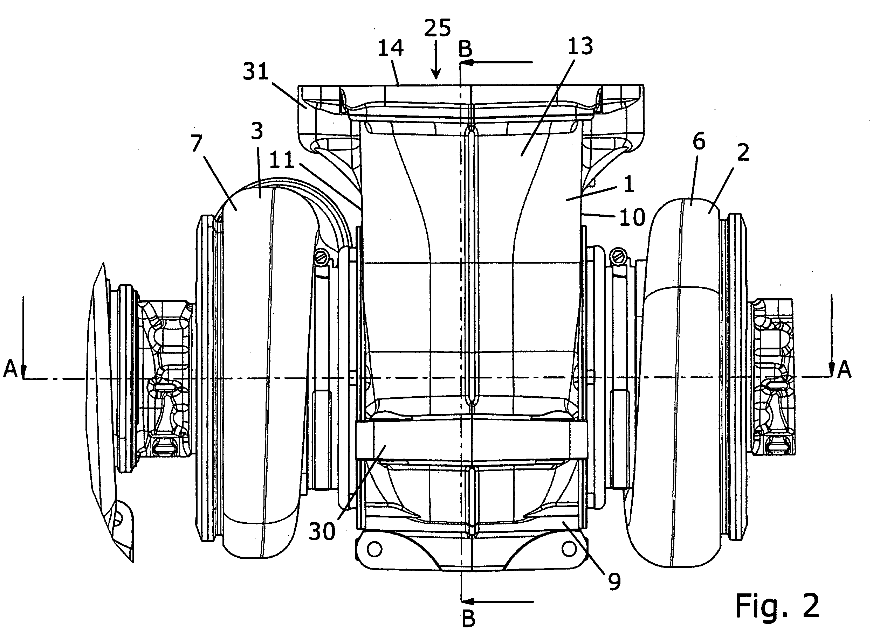

Fig. 2 exemplarisch das zwischen zwei Verdichtern angeordnete Ansauggehäuse nach Fig. 1;
Fig. 3 exemplarisch eine Schnittansicht des zwischen zwei Verdichtern angeordneten Ansauggehäuses entlang der Linie A-A von Fig. 2; und
Fig. 4 exemplarisch eine Schnittansicht des zwischen zwei Verdichtern angeordneten Ansauggehäuses entlang der Linie B-B von Fig. 2.

In der nachfolgenden Beschreibung und den Zeichnungen entsprechen gleichen Bezugszeichen Elemente gleicher oder vergleichbarer Funktion.

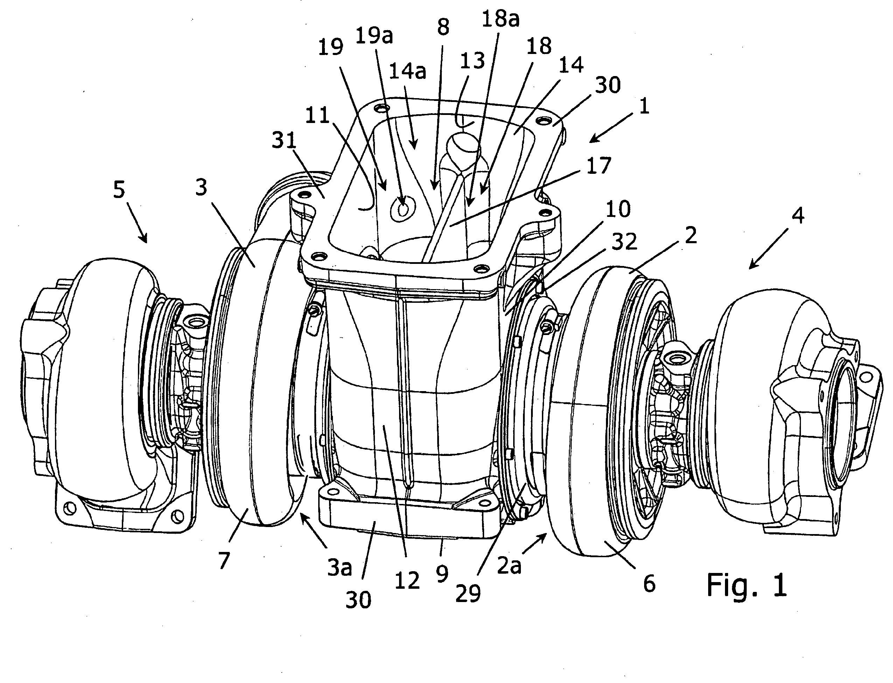

Fig. 1 zeigt ein erfindungsgemäßes Ansauggehäuse 1, welches zwischen einem ersten Verdichter 2 und einem zweiten Verdichter 3 angeordnet ist. Der erste 2 Verdichter ist zum Beispiel Verdichter eines ersten Turboladers 4, der zweite 3 Verdichter zum Beispiel Verdichter eines zweiten Turboladers 5, wobei der erste 4 und der zweite 5 Turbolader zum Beispiel Abgasturbolader in einer Brennkraftmaschine sind oder alternativ z.B. mechanische Lader, z.B. Getriebelader, sind. Die Verdichter 2, 3 können zur Realisierung einer mehrstufigen Aufladung vorgesehen sein, bei welcher die Luft durch mehrere hintereinandergeschaltete Verdichter komprimiert wird. Die Verdichter 2, 3 können dabei auf bekannte Weise z.B. jeweils Verdichter einer ersten Verdichterstufe sein.

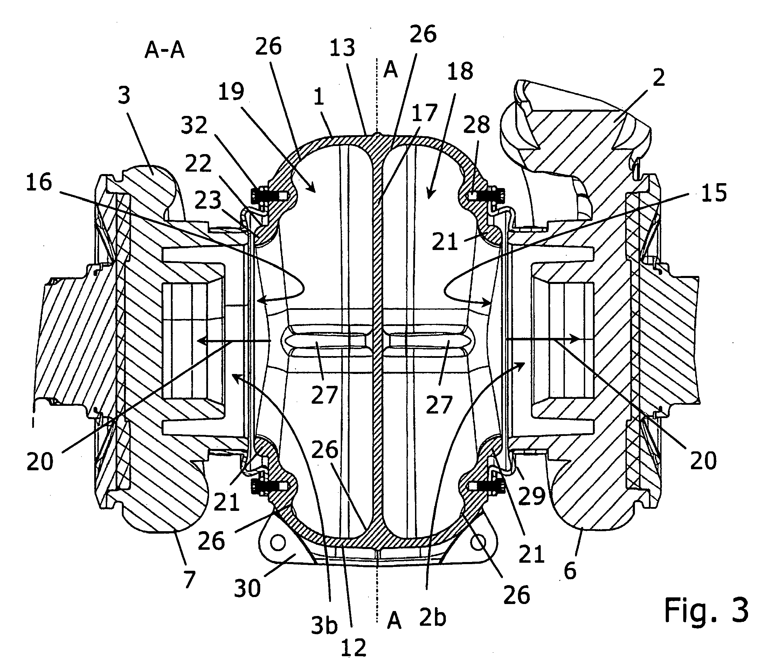

Die Verdichter 2, 3 weisen z.B. je ein Verdichterrad auf (nicht dargestellt), welches in je einem Verdichtergehäuse 6, 7 zur Drehung angeordnet ist, und welches jeweils von einem im Abgasstrom des Turboladers 4, 5 angeordneten Turbinenrad oder auf andere bekannte Weise angetrieben wird. Dabei können die Verdichterräder von erstem 2 und zweitem 3 Verdichter vorliegend z.B. in gleicher oder entgegen gesetzter Drehrichtung drehen. Die Verdichter 2, 3 weisen zum Beispiel je eine Einlassseite 2a, 3a mit einem Verdichtereinlass bzw. einer Einlassöffnung 2b, 3b (Fig. 3) für einströmende bzw. z.B. in Richtung Brennraum zu fördernde Ladeluft auf, sowie eine Auslassseite zur Abgabe der Ladeluft. Bei der vorliegenden Anordnung des Ansauggehäuses 1 zwischen dem ersten 2 und zweiten 3 Verdichter, ist z.B. jeweils die Einlassseite 2a, 3a der Verdichter 2, 3 benachbart zu dem Ansauggehäuse 1 angeordnet.

Das erfindungsgemäße Ansauggehäuse 1 weist einen Innenraum 8 auf, welcher z.B. als Hohlraum ausgebildet ist. Der Innenraum 8 wird von einem Bodenelement 9 begrenzt, insbesondere nach unten begrenzt bzw. geschlossen. Das Bodenelement 9 weist zum Beispiel im Wesentlichen einen rechteckigen Querschnitt auf, z.B. mit einer Wölbung bzw. Ausbauchung in Richtung einer Außenseite des Ansauggehäuses 1. Von dem Bodenelement 9 ragen ein erstes 10 und ein zweites 11 Wandelement bzw. Seitenwandelement auf, welche gegenüberliegend angeordnet sind, z.B. jeweils an einem Rand des Bodenelements 9 bzw. seitlich daran. Das erste 10 und zweite 11 Seitenwandelement ragen zum Beispiel senkrecht oder im Wesentlichen senkrecht von dem Bodenelement 9 hervor und sind zum Beispiel je plattenförmig. Zwischen erstem 10 und zweiten 11 Seitenwandelement wird der Innenraum 8 in z.B. Form des Hohlraums gebildet.

Ferner wird der Innenraum 8 von einem dritten und vierten Wandelement bzw. einem ersten 12 und einem zweiten 13 Stirnwandelement umfasst bzw. umfangen, welche jeweils ebenfalls vom Bodenelement 9 aufragen bzw. sich nach oben erstrecken. Das erste 12 und zweite 13 Stirnwandelement sind gegenüberliegend an dem Bodenelement 9 angeordnet, z.B. je an einem Rand des Bodenelements 9 und z.B. jeweils mit erstem 10 und zweitem 11 Seitenwandelement verbunden, z.B. gasdicht verbunden, z.B. mittels eines Randbereichs. Die Stirnwandelemente 12, 13 sind z.B. ebenfalls plattenförmig gebildet. Die ersten 10 und zweiten 11 Seitenwandelemente sowie die ersten 12 und zweiten 13 Stirnwandelemente umfassen bzw. erstrecken sich um den Innenraum 8 und ragen z.B. jeweils senkrecht oder im Wesentlichen senkrecht von dem Bodenelement 9 hervor. Sie bilden somit z.B. einen im Wesentlichen rechteckförmigen Querschnitt und sind z.B. mit dem Bodenelement 9 integral gebildet.

Ein dem Bodenelement 9 gegenüberliegendes Ende des Ansauggehäuses 1 ist zum Beispiel als offenes Ende 14 ausgebildet, welches eine Einlassöffnung 14a für einen Ladeluftstrom aufweist, welcher z.B. von einem Ladeluftkühler ausgeht oder einem z.B. Luftfilter einer Brennkraftmaschine. Durch die Einlassöffnung 14a strömt, insbesondere im Betriebsfall der Brennkraftmaschine, z.B. Ladeluft in den Innenraum 8 des Ansauggehäuses 1, also vom offenen Ende 14 in Richtung Bodenelement 9. Die Ladeluft kann dazu z.B. von einem Ansaugrohr, welches z.B. mit einem Ende oder z.B. einem Adapterstück am offenen Ende 14 montiert wird, in den Innenraum 8 durch die Eintrittsöffnung 14a geführt bzw. gefördert werden.

Die Ladeluft wird zum Beispiel von dem ersten 2 und zweiten 3 Verdichter angesaugt, welche jeweils an dem Ansauggehäuse 1 mit ihrer Einlassseite 2a, 3a angeordnet sind, z.B. benachbart dazu. Damit ein Verdichter 2, 3 die Ladeluft durch das Ansauggehäuse 1 hindurch ansaugen kann, weist das Ansauggehäuse 1 z.B. eine erste Auslassöffnung 15 auf, welche z.B. in dem ersten Seitenwandelement 10 gebildet ist und eine weitere, zweite Auslassöffnung 16, welche z.B. in dem zweiten Seitenwandelement 11 gebildet ist. Mittels der ersten 15 und zweiten 16 Auslassöffnung kann sich ein Ladeluftstrom vom offenen Ende 14 durch die Auslassöffnungen 15, 16 zu einem mit diesen jeweils verbundenen Verdichter 2, 3 bzw. deren Einlassöffnungen 2b, 3b ausbilden, z.B. falls das Ansauggehäuse 1 vom jeweiligen Verdichter 2, 3 mittels der Auslassöffnungen 15, 16 mit Unterdruck beaufschlagt wird.

Im Innenraum 8 des Ansauggehäuses 1 ist weiterhin erfindungsgemäß ein Stegelement 17 vorgesehen, welches vom Bodenelement 9 aufragt, z.B. senkrecht oder im Wesentlichen senkrecht davon aufragt. Das Stegelement 17 ist zum Beispiel plattenförmig und bildet zum Beispiel die Funktionalität einer Trennwand aus. Das Stegelement 17 teilt zum Beispiel den Innenraum 8 in zwei Kammern 18 und 19, insbesondere Hohlkammern 18, 19, die jeweils mit einer Auslassöffnung 15 bzw. 16 und dem offenen Ende 14 strömungsmäßig verbunden sind und z.B. gleiches Volumen aufweisen, z.B. jeweils einen Innenraum 18a, 19a. Das Stegelement 17 verbindet das erste 12 und das zweite 13 Stirnwandelement miteinander und ist zwischen erstem 10 und zweitem 11 Seitenwandelement angeordnet, z.B. im Wesentlichen parallel zu und mittig zwischen den Seitenwandelementen 10, 11 angeordnet. Das Stegelement 17 bildet insofern mit dem ersten 12 und zweiten 13 Stirnwandelement einen H-förmigen Querschnitt, insbesondere mit senkrecht zueinander ausgerichtetem H-Steg und H-Schenkeln. Der H-Steg ist dabei insbesondere mittig zwischen den H-Schenkeln angeordnet, wobei die H-Steglänge die H-Schenkellänge übersteigen kann.

Durch das Stegelement 17 werden wie oben erwähnt zwei Kammern 18, 19 im Innenraum 8 des Ansauggehäuses 1 abgeteilt, in welchen sich jeweils eine von dem Ladeluftstrom der anderen Kammer 18 bzw. 19 weitgehend unbeeinflusste Ladeluftströmung ausbilden kann. Somit wirkt ein an der Außenseite des Seitenwandelements 10, 11 der jeweiligen Kammer 18, 19 angeordneter Verdichter 2, 3 nicht störend auf den jeweils an dem Seitenwandelement 11, 10 der anderen Kammer 19, 18 angeordneten Verdichter 3, 2 ein.

Im z.B. Betriebsfall der Brennkraftmaschine tritt wie oben erwähnt Ladeluft vom offenen Ende 14 her in das Ansauggehäuse 1 ein, wobei der Ladeluftstrom von dem Stegelement 17 geteilt wird bzw. auf die im Innenraum 8 gebildeten Kammern 18, 19 aufgeteilt wird. Damit die Ladeluft in der jeweiligen Kammer 18, 19 bzw. in deren jeweiligem Innenraum 18a, 19a von allen Seiten durch die jeweilige Auslassöffnung 15, 16 in den zugehörigen Verdichter 2, 3 strömen kann, bzw. eine homogene Strömungsführung erreicht wird, ist der Innenraum 8 des Ansauggehäuses 1, insbesondere im Bereich der Auslassöffnungen 15, 16 bzw. um die Auslassöffnungen 15, 16 z.B. grossvolumig ausgebildet.

Dazu kann im Bereich der Auslassöffnungen 15, 16 z.B. ein Ringvolumen gebildet sein, z.B. kann das erste 10 und/oder zweite 11 Seitenwandelement im Bereich der jeweiligen Auslassöffnung 15, 16 in Auslassrichtung 20 Trichterform bzw. einen trichterförmigen Querschnitt 21 aufweisen, welcher z.B. die Strömungsführung begünstigt. Das Seitenwandelement 10, 11 kann dazu z.B. um die Auslassöffnung 15, 16 jeweils eine Auskragung 22 aufweisen (hin zu der dem Innenraum 8 gegenüberliegenden Außenseite), z.B. einen Wulst 23 je um die Auslassöffnung 15, 16 herum aufweisen oder auf andere Weise ein großes, die Strömung begünstigendes Volumen bzw. Ringvolumen schaffen. Somit kann die Luft nicht nur von oben bzw. der Einlassöffnung 14a her in den jeweiligen Verdichter 2, 3 strömen. Ein Durchmesser der Auslassöffnungen 15, 16 weist dabei relativ zu einem Abstand der Stirnwandelemente 12, 13 (bzw. H-Steglänge) z.B. deutlich geringere Abmessungen auf.

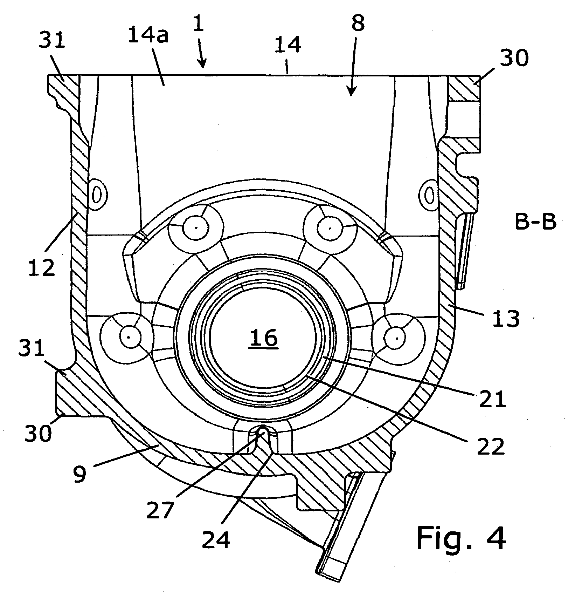

Um einen z.B. drallarmen bzw. wirbelfreien Luftstrom im Ansauggehäuse 1 zu erzeugen kann der Innenraum 8 bzw. jede Hohlkammer 18, 19 in Richtung eines unteren Innenendes 24 (Fig. 4) einen sich z.B. verjüngenden Querschnitt aufweisen, welcher durch das Bodenelement 9 ausgebildet werden oder in Verbindung mit den Stirnwandelementen 12, 13 gebildet werden kann. Zum Beispiel können erstes 12 und zweites 13 Stirnwandelement zusammen mit dem Bodenelement 9 den Innenraum 8 im Querschnitt U-förmig umfassen, wobei der untenliegende Steg der U-Form nach unten bzw. in Einlassrichtung 25 gewölbt sein kann. Dies kann z.B. durch eine Wölbung des Bodenelements 9 in Einlassrichtung 25 erreicht werden (Ausbauchung in Einlassrichtung).

Weiterhin kann daneben vorgesehen sein, eine oder mehrere Verbindungsstellen bzw. Stöße 26 im Innenraum, welche jeweils z.B. zwischen einem Seitenwandelement 10, 11 und einem Stirnwandelement 12, 13, zwischen einem Seitenwandelement 10, 11 und dem Bodenelement 9, zwischen einem Stirnwandelement 12, 13 und dem Bodenelement 9, zwischen dem Stegelement 17 und einem Stirnwandelement 12, 13, sowie zwischen dem Stegelement 17 und dem Bodenelement 9 gebildet sind (Innenecken im Querschnitt), abzurunden bzw. bogenförmig auszubilden, um störende Verwirbelungen im Ladeluftstrom zu vermeiden.

Um den Drall einströmender Luft bzw. Ladeluft zu vermindern, insbesondere z.B. ein Rückströmen der Ladeluft in Richtung offenes Ende 14a zu vermeiden, ist am Bodenelement 9 ein Rippenelement 27 angeordnet, welches von diesem in Richtung Innenraum 8, entgegen der Einlassrichtung 25, hervorragt und somit z.B. auf den Luftstrom bodenseitig drallverhindernd einwirkt. Das Rippenelement 27 ist zum Beispiel senkrecht bzw. quer zu dem Stegelement 17 angeordnet (z.B. 90 Grad versetzt) und erstreckt sich z.B. nur einen Bruchteil dessen Ausdehnung in Richtung Einlassöffnung 14a, z.B knapp bis unterhalb der Auslassöffnungen 15, 16. Das Rippenelement 27 ist zum Beispiel auf beiden Seiten des Stegelements 17 jeweils am Bodenelement 9 bzw. in jeder Kammer 18, 19 angeordnet, z.B. mittig zwischen erstem 12 und zweitem 13 Stirnwandelement und z.B. im Wesentlichen parallel jeweils zu diesen.

Damit sich die Luftströmung in beiden Kammern 18, 19 im Wesentlichen gleichartig ausbilden kann, liegen sich die erste 15 und die zweite 16 Auslassöffnung (in Auslassrichtung) gegenüber und/oder weisen gleichen Auslassquerschnitt auf. Insbesondere weisen z.B. die erste 15 und die zweite 16 Auslassöffnung gleichen Abstand zum Bodenelement 9 auf, sind oberhalb desselben also in gleicher Höhe angeordnet. Es ist weiterhin vorgesehen, dass die erste 15 und zweite 16 Auslassöffnung gleichen Abstand zum jeweiligen Stirnwandelement 12, 13 aufweisen und/oder zu dem Stegelement 17. Insofern ist das Ansauggehäuse 1 zum Beispiel symmetrisch zu einer Mittelachse A ausgebildet, welche z.B. durch das Stegelement 17 verläuft.

Um die Verdichter 2, 3 jeweils mit einer Auslassöffnung 15, 16 des Ansauggehäuses 1 zu verbinden, ist vorgesehen, dass ein bzw. je ein Seitenwandelement 10, 11 eine Befestigungsvorrichtung 28 aufweist, insbesondere an einer dem Innenraum 8 gegenüberliegenden Außenseite, mittels welcher zum Beispiel ein Faltenbalg 29 an dem Seitenwandelement 10, 11 um die Auslassöffnung 15, 16 und den Verdichtereinlass dauerhaft, z.B. dauerhaft und ohne zerstörerischen Eingriff lösbar befestigt werden kann.

Um das Ansauggehäuse 1 mit weiteren Bestandteilen der Brennkraftmaschine verbinden zu können, ist zum Beispiel ferner z.B. eine oder mehrere Befestigungsvorrichtung(en) 30 am offenen Ende 14 und/oder an einem Seiten- bzw. Stirnwandelement und/oder am Bodenelement 9 vorgesehen, welche zum Beispiel jeweils eine dauerhafte und z.B. ohne zerstörerischen Eingriff lösbare Befestigung ermöglichen. Die Befestigungsvorrichtung 30 kann z.B. als Flanschelement 31 ausgeführt sein, z.B. zur Verschraubung mit einem korrespondierenden Flanschelement.

Um eine erfindungsgemäße Brennkraftmaschine auszubilden wird z.B. ein erfindungsgemäßes Ansauggehäuse 1 zwischen einem ersten 2 und einem zweiten 3 Verdichter angeordnet. Dabei wird die Einlassöffnung 2b des ersten Verdichters 2 z.B. benachbart zu der Auslassöffnung 15 des ersten Seitenwandelements 10 angeordnet und die Einlassöffnung 3b des zweiten Verdichters 3 z.B. benachbart zu der Auslassöffnung 16 des zweiten Seitenwandelements 11 angeordnet, insbesondere zur strömungsmäßigen Verbindung. Der Verdichter 2, 3 kann dabei jeweils mit dem Ansauggehäuse 1 starr verbunden werden, z.B. mittels einer Befestigungsvorrichtung 28 des Ansauggehäuses 1. Dabei kann von herkömmlichen Befestigungsarten Gebrauch gemacht werden.

Es ist vorgesehen, den Verdichter z.B. mittels eines Faltenbalges 29 an dem Ansauggehäuse 1 anzuordnen, so dass durch den Faltenbalg 29, ggf. unter Verwendung einer zusätzlichen Dichtung, z.B. einer Ringdichtung, eine Abdichtung erzielt werden kann und z.B. gleichzeitig eine Entkopplung des Verdichters 2, 3 von dem Ansauggehäuse 1 erfolgt, z.B. eine Schwingungsentkopplung. Ein Faltenbalg 29 ist z.B. eine in seinen Längs- und/oder Querausdehnungen infolge Faltung variierbare schlauchförmige Anordnung, welcher der Längs- und/oder Querausdehnung der durch ihn verbundenen Komponenten folgen kann. Ein Ende des Faltenbalgs 29 wird z.B. um den Verdichtereingang bzw. eine Verdichtereinlassöffnung 2b bzw. 3b herum angeordnet bzw. befestigt. Das zweite Ende wird z.B. um die strömungsmäßig zu verbindende Auslassöffnung 15 bzw. 16 an der Außenseite des Seitenwandelements 10 bzw. 11 herum angeordnet und an dem Ansauggehäuse 1 befestigt, z.B. mittels der Befestigungsvorrichtung 28 und einem z.B. am Faltenbalg angeordneten, korrespondierenden Befestigungsmittel 32.

## Patentansprüche

1. Ansauggehäuse (1) für eine Brennkraftmaschine, insbesondere zur Anordnung zwischen einem ersten (2) und einem zweiten (3) Verdichter einer Brennkraftmaschine, wobei das Ansauggehäuse (1) einen Innenraum (8) aufweist, welcher von einem Bodenelement (9), einem ersten (10) und einem zweiten (11) sich gegenüberliegenden, vom Bodenelement (9) aufragenden Seitenwandelement sowie einem ersten (12) und einem zweiten (13) sich gegenüberliegenden, vom Bodenelement (9) aufragenden Stirnwandelement umfasst ist, wobei gegenüber des Bodenelements (9) ein offenes Ende (14) mit einer Einlassöffnung (14a) zum Eintritt von Ladeluft in den Innenraum (8) des Ansauggehäuses (1) gebildet ist, wobei im Innenraum (8) ein zwischen erstem (10) und zweitem (11) Seitenwandelement angeordnetes, vom Bodenelement (9) aufragendes Stegelement (17) ausgebildet ist, welches das erste (12) und das zweite (13) Stirnwandelement miteinander verbindet, und wobei das erste Seitenwandelement (10) eine erste Auslassöffnung (15) und das zweite Seitenwandelement (11) eine zweite Auslassöffnung (16) jeweils zur Anströmung eines Verdichtereinlasses (2b, 3b) aufweisen, **dadurch gekennzeichnet, dass** das Bodenelement (9) ein von diesem in Richtung Innenraum (8) hervorragendes Rippenelement (27) aufweist, welches guer, insbesondere senkrecht, zu dem Stegelement (17) angeordnet ist.

2. Ansauggehäuse (1) nach Anspruch 1, **dadurch gekennzeichnet, dass** das Stegelement (17) im Wesentlichen senkrecht vom Bodenelement (9) aufragt.

3. Ansauggehäuse (1) nach Anspruch 1 oder 2, **dadurch gekennzeichnet, dass** das erste (10) und das zweite (11) Seitenwandelement sowie das erste (12) und das zweite (13) Stirnwandelement im Wesentlichen senkrecht vom Bodenelement (9) aufragen.

4. Ansauggehäuse (1) nach einem der vorhergehenden Ansprüche, **dadurch gekennzeichnet, dass** das Stegelement (17) das erste (12) und das zweite (13) Stirn-Stirnwandelement derart miteinander verbindet, dass ein Querschnitt aus erstem (12) und zweitem (13) Stirnwandelement sowie dem Stegelement (17) im Wesentlichen eine H-Form bildet, insbesondere eine H-Form mit mittig zwischen erstem und zweitem Schenkel der H-Form angeordnetem Steg.

5. Ansauggehäuse (1) nach einem der vorhergehenden Ansprüche, **dadurch gekennzeichnet, dass** die erste Auslassöffnung (15) des ersten Seitenwandelements (10) der zweiten Auslassöffnung (16) des zweiten Seitenwandelements (11) gegenüberliegt.

6. Ansauggehäuse (1) nach einem der vorhergehenden Ansprüche, **dadurch gekennzeichnet, dass** die erste (15) und die zweite (16) Auslassöffnung einen gleichen Auslassquerschnitt aufweisen.

7. Ansauggehäuse (1) nach einem der vorhergehenden Ansprüche, **dadurch gekennzeichnet, dass** die erste (15) und die zweite (16) Auslassöffnung gleichen Abstand zum Bodenelement (9) und/oder zu einem Stirnwandelement (12, 13) und/oder zu dem Stegelement (17) aufweisen.

8. Ansauggehäuse (1) nach einem der vorhergehenden Ansprüche, **dadurch gekennzeichnet, dass** das Bodenelement (9) in Verbindung mit erstem (12) und zweitem (13) Stirnwandelement im Querschnitt im Wesentlichen eine U-Form ausbildet.

9. Ansauggehäuse (1) nach einem der vorhergehenden Ansprüche, **dadurch gekennzeichnet, dass** die erste (15) und die zweite (16) Auslassöffnung In Richtung vom Bodenelement (9) zur Einlassöffnung (14a) oberhalb des Rippenelements (27) gebildet sind.

10. Ansauggehäuse (1) nach einem der vorhergehenden Ansprüche, **dadurch gekennzeichnet, dass** das erste (10) und/oder das zweite (11) Seitenwandelement im Bereich der ersten (15) und zweiten (16) Auslassöffnung in Auslassrichtung (20) einen trichterförmigen Querschnitt aufweisen.

11. Ansauggehäuse (1) nach einem der vorhergehenden Ansprüche, **dadurch gekennzeichnet, dass** das Stegelement (17) den Innenraum (8) des Ansauggehäuses (1) in zwei Kammern (18, 19) teilt.

12. Ansauggehäuse (1) nach einem der vorhergehenden Ansprüche, **dadurch gekennzeichnet, dass** am offenen Ende (14) des Ansauggehäuses (1) ein Befestigungselement (30) vorgesehen ist.

13. Ansauggehäuse (1) nach einem der vorhergehenden Ansprüche, **dadurch gekennzeichnet, dass** ein Seitenwandelement (10,11) an einer dem innenraum (8) gegenüberliegenden Außenseite eine Befestigungsvorrichtung (28) aufweist, insbesondere zur Befestigung eines Faltenbalgs (29).

14. Brennkraftmaschine mit einem ersten (2) und einem zweiten (3) Verdichter, **dadurch gekennzeichnet, dass** zwischen erstem (2) und zweitem (3) Verdichter ein Ansauggehäuse (1) nach einem der Ansprüche 1 bis 13 angeordnet ist

15. Brennkraftmaschine nach Anspruch 14, **dadurch gekennzeichnet, dass** der erste Verdichter (2) mit einem Verdichtereinlass (2b) an der ersten Auslassöffnung (15) angeordnet ist und/oder der zweite Verdichter (3) mit einem Verdichtereinlass (3b) an der zweiten Auslassöffnung (16) angeordnet ist.

16. Brennkraftmaschine nach einem der Ansprüche 14 oder 15, **dadurch gekennzeichnet, dass** zwischen einem Verdichter (2, 3) und dem Ansauggehause (1) ein Faltenbalg (29) angeordnet ist.

## Claims

1. Suction housing (1) for an internal combustion engine, in particular for arrangement between a first (2) and a second (3) compressor of an internal combustion engine, wherein the suction housing (1) has an interior space (8) which is encompassed by a base element (9), by a first (10) and a second (11) side wall element, which side wall elements are situated opposite one another and project upward from the base element (9), and by a first (12) and a second (13) face wall element, which face wall elements are situated opposite one another and project upward from the base element (9), wherein, opposite the base element (9), there is formed an open end (14) with an inlet opening (14a) for the admission of charge air into the interior space (8) of the suction housing (1), wherein, in the interior space (8), there is formed a web element (17) which is arranged between the first (10) and second (11) side wall elements and which projects upward from the base element (9) and which connects the first (12) and the second (13) face wall element to one another, and wherein the first side wall element (10) has a first outlet opening (15) and the second side wall element (11) has a second outlet opening (16), in each case for a flow to a compressor inlet (2b, 3b), **characterized in that** the base element (9) has a rib element (27) which projects from said base element in the direction of the interior space (8) and which is arranged transversely, in particular perpendicularly, with respect to the web element (17).

2. Suction housing (1) according to Claim 1, **characterized in that** the web element (17) projects substantially vertically upward from the base element (9) .

3. Suction housing (1) according to Claim 1 or 2, **characterized in that** the first (10) and the second (11) side wall element and the first (12) and the second (13) face wall element project substantially vertically upward from the base element (9).

4. Suction housing (1) according to one of the preceding claims, **characterized in that** the web element (17) connects the first (12) and the second (13) face wall element to one another such that a cross section composed of the first (12) and second (13) face wall element and the web element (17) substantially forms an H shape, in particular an H shape with a web arranged centrally between the first and second limbs of the H shape.

5. Suction housing (1) according to one of the preceding claims, **characterized in that** the first outlet opening (15) of the first side wall element (10) is situated opposite the second outlet opening (16) of the second side wall element (11).

6. Suction housing (1) according to one of the preceding claims, **characterized in that** the first (15) and the second (16) outlet opening have an identical outlet cross section.

7. Suction housing (1) according to one of the preceding claims, **characterized in that** the first (15) and the second (16) outlet opening have the same spacing to the base element (9) and/or to a face wall element (12, 13) and/or to the web element (17).

8. Suction housing (1) according to one of the preceding claims, **characterized in that** the base element (9) in conjunction with the first (12) and second (13) face wall elements forms substantially a U shape in cross section.

9. Suction housing (1) according to one of the preceding claims, **characterized in that** the first (15) and the second (16) outlet opening are formed above the rib element (27) in the direction from the base element (9) to the inlet opening (14a).

10. Suction housing (1) according to one of the preceding claims, **characterized in that** the first (10) and/or the second (11) side wall element have/has, in the region of the first (15) and second (16) outlet openings, a funnel-shaped cross section in the outlet direction (20).

11. Suction housing (1) according to one of the preceding claims, **characterized in that** the web element (17) divides the interior space (8) of the suction housing (1) into two chambers (18, 19).

12. Suction housing (1) according to one of the preceding claims, **characterized in that** a fastening element (30) is provided at the open end (14) of the suction housing (1).

13. Suction housing (1) according to one of the preceding claims, **characterized in that** a side wall element (10, 11) has, on an outer side situated opposite the interior space (8), a fastening device (28), in particular for the fastening of a corrugated bellows (29).

14. Internal combustion engine having a first (2) and a second (3) compressor, **characterized in that** an suction housing (1) according to one of Claims 1 to 13 is arranged between the first (2) and second (3) compressors.

15. Internal combustion engine according to Claim 14, **characterized in that** the first compressor (2) is arranged with a compressor inlet (2b) on the first outlet opening (15) and/or the second compressor (3) is arranged with a compressor inlet (3b) on the second outlet opening (16).

16. Internal combustion engine according to Claim 14 or 15, **characterized in that** a corrugated bellows (29) is arranged between a compressor (2, 3) and the suction housing (1).

## Revendications

1. Carter d'aspiration (1) pour un moteur à combustion interne, en particulier destiné à être agencé entre un premier (2) et un deuxième (3) compresseur d'un moteur à combustion interne, le carter d'aspiration (1) présentant un espace interne (8) qui est entouré par un élément de fond (9), un premier (10) et un deuxième (11) élément de paroi latérale opposés l'un à l'autre, faisant saillie depuis l'élément de fond (9) ainsi qu'un premier (12) et un deuxième (13) élément de paroi frontale opposés l'un à l'autre, faisant saillie depuis l'élément de fond (9), une extrémité ouverte (14) avec une ouverture d'entrée (14a) pour l'entrée d'air de suralimentation dans l'espace interne (8) du carter d'aspiration (1) étant formée à l'opposé de l'élément de fond (9), un élément d'âme (17) faisant saillie depuis l'élément de fond (9), disposé entre le premier (10) et le deuxième (11) élément de paroi latérale, étant réalisé dans l'espace interne (8), lequel relie le premier (12) et le deuxième (13) élément de paroi frontale, et le premier élément de paroi latérale (10) présentant une première ouverture de sortie (15) et le deuxième élément de paroi latérale (11) présentant une deuxième ouverture de sortie (16) pour l'afflux respectif au niveau d'une entrée de compresseur (2b, 3b), **caractérisé en ce que** l'élément de fond (9) présente un élément de nervure (27) faisant saillie depuis celui-ci dans la direction de l'espace interne (8), lequel est disposé transversalement, en particulier perpendiculairement, à l'élément d'âme (17).

2. Carter d'aspiration (1) selon la revendication 1, **caractérisé en ce que** l'élément d'âme (17) fait saillie essentiellement perpendiculairement depuis l'élément de fond (9).

3. Carter d'aspiration (1) selon la revendication 1 ou 2, **caractérisé en ce que** le premier (10) et le deuxième (11) élément de paroi latérale ainsi que le premier (12) et le deuxième (13) élément de paroi frontale font saillie essentiellement verticalement depuis l'élément de fond (9).

4. Carter d'aspiration (1) selon l'une quelconque des revendications précédentes, **caractérisé en ce que** l'élément d'âme (17) relie l'un à l'autre le premier (12) et le deuxième (13) élément de paroi frontale de telle sorte qu'une section transversale constituée du premier (12) et du deuxième (13) élément de paroi frontale ainsi que de l'élément d'âme (17) forme essentiellement une forme en H, en particulier une forme en H avec une âme disposée centralement entre la première et la deuxième branche de la forme en H.

5. Carter d'aspiration (1) selon l'une quelconque des revendications précédentes, **caractérisé en ce que** la première ouverture de sortie (15) du premier élément de paroi latérale (10) est opposée à la deuxième ouverture de sortie (16) du deuxième élément de paroi latérale (11).

6. Carter d'aspiration (1) selon l'une quelconque des revendications précédentes, **caractérisé en ce que** la première (15) et la deuxième (16) ouverture de sortie présentent une section transversale de sortie identique.

7. Carter d'aspiration (1) selon l'une quelconque des revendications précédentes, **caractérisé en ce que** la première (15) et la deuxième (16) ouverture de sortie présentent un espacement identique par rapport à l'élément de fond (9) et/ou un élément de paroi frontale (12, 13) et/ou l'élément d'âme (17).

8. Carter d'aspiration (1) selon l'une quelconque des revendications précédentes, **caractérisé en ce que** l'élément de fond (9), en association avec le premier (12) et le deuxième (13) élément de paroi frontale, constitue essentiellement une forme en U en section transversale.

9. Carter d'aspiration (1) selon l'une quelconque des revendications précédentes, **caractérisé en ce que** la première (15) et la deuxième (16) ouverture de sortie sont formées dans la direction de l'élément de fond (9) vers l'ouverture d'entrée (14a) au-dessus de l'élément de nervure (27).

10. Carter d'aspiration (1) selon l'une quelconque des revendications précédentes, **caractérisé en ce que** le premier (10) et/ou le deuxième (11) élément de paroi latérale présentent une section transversale en forme d'entonnoir dans la région de la première (15) et de la deuxième (16) ouverture de sortie dans la direction de sortie (20).

11. Carter d'aspiration (1) selon l'une quelconque des revendications précédentes, **caractérisé en ce que** l'élément d'âme (17) divise l'espace interne (8) du carter d'aspiration (1) en deux chambres (18, 19) .

12. Carter d'aspiration (1) selon l'une quelconque des revendications précédentes, **caractérisé en ce qu'**un élément de fixation (30) est prévu au niveau de l'extrémité ouverte (14) du carter d'aspiration (1) .

13. Carter d'aspiration (1) selon l'une quelconque des revendications précédentes, **caractérisé en ce qu'**un élément de paroi latérale (10, 11) présente, au niveau d'un côté extérieur opposé à l'espace interne (8), un dispositif de fixation (28), en particulier pour la fixation d'un soufflet (29).

14. Moteur à combustion interne comprenant un premier (2) et un deuxième (3) compresseur, **caractérisé en ce qu'**entre le premier (2) et le deuxième (3) compresseur est disposé un carter d'aspiration (1) selon l'une quelconque des revendications 1 à 13.

15. Moteur à combustion interne selon la revendication 14, **caractérisé en ce que** le premier compresseur (2) est disposé avec une entrée de compresseur (2b) au niveau de la première ouverture de sortie (15) et/ou le deuxième compresseur (3) est disposé avec une entrée de compresseur (3b) au niveau de la deuxième ouverture de sortie (16).

16. Moteur à combustion interne selon l'une quelconque des revendications 14 ou 15, **caractérisé en ce qu'**entre un compresseur (2, 3) et le carter d'aspiration (1) est disposé un soufflet (29).
